Europäisches Patentamt

European Patent Office

Office européen des brevets

(19)

(11) Veröffentlichungsnummer: **0 060 413**
**B2**

(12) **NEUE EUROPÄISCHE PATENTSCHRIFT**

(45) Veröffentlichungstag der neuen Patentschrift:
05.07.89

(51) Int. Cl.⁴: **B 43 L 13/02,** G 06 F 7/548

(21) Anmeldenummer: **82101360.4**

(22) Anmeldetag: **23.02.82**

(54) Zeicheneinrichtung.

(30) Priorität: **17.03.81 DE 3110271**

(43) Veröffentlichungstag der Anmeldung:
**22.09.82 Patentblatt 82/38**

(45) Bekanntmachung des Hinweises auf die Patenterteilung:
**22.05.85 Patentblatt 85/21**

(45) Bekanntmachung des Hinweises auf die Entscheidung
über den Einspruch:
**05.07.89 Patentblatt 89/27**

(84) Benannte Vertragsstaaten:
**AT BE CH DE FR GB IT LI LU NL SE**

(56) Entgegenhaltungen:
**DE-A- 2 546 690
DE-A- 2 717 399
DE-A- 2 913 961
FR-A- 2 208 554
GB-A- 1 545 414
JP-A-50 091 346
NL-A- 7 709 482
US-A- 3 346 724**

**HEWLETT-PACKARD "A POCKET GUIDE TO
HEWLETT-PACKARD COMPUTERS", July 1970
BRONSTEIN-SEMENDJAJEN, "TASCHENBUCH DER
MATHEMATIK", VERLAG HARRI DEUTSCH,
FRANKFURT, 1964**

(73) Patentinhaber: **Franz Kuhlmann Präzisionsmechanik und
Maschinenbau GmbH & Co. KG, Banter Weg 12,
D-2940 Wihelmshaven (DE)**

(72) Erfinder: **Eder, Hans, Adlerstrasse 13,
D-2948 Accum/Schortens 5 (DE)**

(74) Vertreter: **Eisenführ & Speiser, Martinistrasse 24,
D-2800 Bremen 1 (DE)**

## Beschreibung

Die Erfindung betrifft eine Zeicheneinrichtung mit einer Laufwagen-Zeichenmaschine, mit Wegstreckenmesseinrichtungen an den Laufwagen, die eine der Laufwagenverschiebung proportionale Anzahl an elektrischen Impulsen abgeben, welche mit einem einstellbaren Massstabsfaktor gewichtet und als Koordinatenwertepaare eines kartesischen Basiskoordinatensystems gezählt werden und an Anzeigeeinheiten im Bereich der entsprechenden Laufwagen anzeigbar sind, wobei das Basiskoordinatsystem einen wählbaren, ortsfesten Nullpunkt und in Laufrichtung der Laufwagen festliegende Achsrichtungen aufweist, mit Schaltungsmitteln zur Transformation der gezählten kartesischen Koordinatenwertepaare in Koordinatenwertepaare eines wählbaren anderen Koordinatensystems, und mit einer Steuereinheit mit Eingabetastenfeld zur Wahl der Koordinatentransformation und zur Abgabe der gezählten oder der transformierten Koordinatenwertepaare an die Anzeigeeinheiten, wobei eine Datenaufbereitungseinheit vorgesehen ist, welche mit einem Speicher und der Steuereinheit verbunden ist.

Derartige Zeicheneinrichtungen werden vorwiegend an Zeichenbrettern zum Zeichnen eingesetzt und sind an dem das Zeichenbrett überstreichenden Laufwagen mit einem Zeichenkopf bestückt, der in der Zeichenebene zwei rechtwinklig gegeneinander versetzte Zeichenlineale aufnimmt. Derartige Zeicheneinrichtungen lassen sich jedoch auch an waagerechten Zeichentischen, an Koordinatenerfassungsgeräten od. dgl. verwenden und sollen dem Benutzer das Anfertigen von Zeichnungen oder das Erfassen von Koordinaten etc. erleichtern.

Aus der DE-A 2 546 690 ist eine derartige Zeicheneinrichtung bekannt, die ausserdem noch einen Stellantrieb besitzt, um die Laufwagen in eine gewünschte Sollposition eines gewählten kartesischen Koordinatensystems zu verfahren. Damit die Laufwagen ihre gewünschte Sollposition jeweils genau erreichen, ist eine Regelung vorgesehen, welche die jeweils aktuellen Koordinaten-Istwerte der Laufwagen mit den Sollwerten vergleicht und den Stellantrieb stoppt, wenn die Istwerte mit den Sollwerten übereinstimmen. Bei dieser bekannten Zeicheneinrichtung werden die Koordinaten-Istwerte in elektrische Koordinatenwert-Signale umgewandelt und während der Zeichnungserstellung kontinuierlich ausgegeben, was den Nachteil hat, dass ein extern angeschlossener Speicher schnell überlaufen würde.

Aus der DE-A 2 717 399 ist eine Laufwagen-Zeicheneinrichtung der eingangs genannten Art bekannt, bei der die aktuellen Positions-Koordinaten des Zeichenkopfes oder des Linealkanten-Schnittpunkts in dem kartesischen Basiskoordinatensystem erfasst werden, bei dem der Nullpunkt auf der Zeichenebene frei vorgebbar ist, bei dem jedoch konstruktionsbedingt die Koordinatenachsen stets in Laufrichtung der beiden Laufwagen festliegen. Die gezählten aktuellen Koordinatenwerte des Basissystems werden – ggfs. mit einer gewünschten Massstabsgewichtung – an Anzeigeeinheiten angezeigt, die im Bereich eines Laufwagens oder des Zeichenkopfes angeordnet sind. Mit dieser bekannten Einrichtung ist es möglich, den Nullpunkt des Basiskoordinatensystems, nachfolgend auch als Basissystem bezeichnet, an eine beliebige Stelle der Zeichenebene zu legen und die gezählten Koordinatenwerte mit einem beliebigen Massstabsfaktor gewichtet anzuzeigen. Dem Benutzer sollen dadurch zum Beispiel bei der Bemassung Zeichenhilfen gewährt werden, die ein rascheres Erstellen der Zeichnung ermöglichen. Ausser beim Ziehen paralleler Linien und bei der Bemassung der fertigen Zeichnung erfährt der Benutzer jedoch keine weitere Hilfe. Insbesondere ist der Zeichner auf das Basiskoordinatensystem festgelegt, wodurch insbesondere diejenigen Teile von Zeichnungen, welche aus Kreisstücken od. dgl. bestehen, ohne weitere Zeichenhilfen angefertigt werden müssen, wodurch die Brauchbarkeit der bekannten Einrichtungen beschränkt ist.

Aus der GB-A 1 545 414 ist eine Laufwagen-Zeicheneinrichtung bekannt, welche am Zeichenkopf Wegstreckenmesseinrichtungen enthält, welche ein digitales Signal abgeben, das dem vom Linealhalter des Zeichenkopfes zurückgelegten aktuellen Drehwinkel proportional ist. Das digitale Signal wird dann in eine digitale Grösse umgewandelt, welche an einer digitalen Anzeigeeinheit den gegenüber einem frei setzbaren Nullwert zurückgelegten Winkel des Linealhalters anzeigt.

In neuerer Zeit finden bei der Erstellung von Fabrikationszeichnungen auch rechnerunterstützte Methoden, sog. CAD-Methoden, Anwendung. Im Rahmen dieser CAD-Methoden werden zur Erstellung von Fabrikationszeichnungen Rechner, Speichereinrichtungen, wie z. B. Plattenspeicher oder Lochstreifengeräte verwendet, zur Sichtbarmachung von Zeichnungen, die in Form numerischer Daten gespeichert werden, lassen sich an die Leseausgänge der Speicher Bildschirme, an die Einschreibanschlüsse der Speicher Koordinaten-Erfassungsgeräte und Plotter anschliessen. Das Ziel dieser CAD-Methoden ist es, die manuell am Zeichenbrett erstellten Entwürfe oder Zeichnungen mit möglichst geringem Programmier- und Speicheraufwand in numerische Datenmengen umzusetzen, die auf bekannten Speichermedien abgespeichert und bei Bedarf wieder ausgelesen und dann numerisch gesteuerten Maschinen, z. B. Werkzeugmaschinen oder Plottern als Steuersignale zugeführt werden.

Um die Umsetzung einer Zeichnung in numerische Daten mit dem zulässigen Programmier- und Speicheraufwand durchzuführen, wird eine Zeichnung am Zeichenbrett gezeichnet und im allgemeinen vollständig bemasst. Anschliessend werden die Konturen des gezeichneten Gegenstands bzw. von dargestellten Einzelheiten in irgendeiner Form-Beschreibungssprache über ein sog. Menüfeld in einen Speicher eingegeben. Als Form-Beschreibungssprache werden dabei bestimmte Grundlinienelemente, Kreise, Geraden etc. in dem jeweils zur Beschreibung des betreffenden Linienelements geeignetsten Koordinatensystem verwendet, wobei z.B. jeweils die Art des Linienelements und die Koordinaten des Endpunkts des Linienelements, welches von einem aktuellen Punkt der Gesamtlinie aus zu zeichnen ist, gespeichert werden. Die in der Fabrikationszeichnung eingetragenen Masse müssen in den meisten Fällen zusätzlich eingegeben werden, und diese Arbeitsmethode ist trotz grossen Zeitaufwands nur möglich, wenn je nach Art des zu beschreibenden Linienelements das jeweils geeignetste Koordinatensystem verwendet werden kann, wenn also ein zwangsloser Übergang in verschiedene Koordinatensysteme jederzeit möglich ist.

Aus der JP-A 5 091 346 ist ein Koordinaten-Erfassungsgerät bekannt, welches ein Tastelement enthält, um einen zu vermassenden dreidimensionalen Gegenstand abzutasten. Die Bewegung des Tastelements wird in den drei Richtungen des kartesischen Basiskoordinatensystems gemessen, die Messwerte werden als Koordinaten X, Y, Z ausgezählt und entweder direkt oder nach Durchlaufen eines Rechners als transformierte kartesische oder Polarkoordinatenwerte an einer Anzeigeeinheit angezeigt. Alternativ lassen sich fertige Zeichnungen mittels dieses bekannten Gerätes erfassen, digitalisieren und in Form numerischer Daten abspeichern.

Nachteilig ist dabei, dass zuerst die Zeichnung manuell am Zeichenbrett erstellt und vollständig bemasst werden muss und dass anschliessend auf diesem bekannten Gerät die während der Zeichnungserstellung gezogenen Linien im wesentlichen nochmals abgefahren oder abgetastet bzw. über das Menüfeld nachgebildet und erst dann gespeichert werden können. Unvermeidliche Abtast- oder Erfassungsfehler sind die Folge. Nachteilig ist ferner, dass eine Änderung der Kontur und Bemassung einer Zeichnung, und eine entsprechende Änderung des Speicherinhalts umständlich und zeitaufwendig ist, da die Zeichnung ständig zwischen Zeichenbrett und Koordinatenerfassungsgerät oder Menüfeld hin- und herwandern muss.

Aufgabe der Erfindung ist es demgegenüber, eine Zeicheneinrichtung der eingangs genannten Art derart weiterzubilden, dass der Benutzer während des Zeichnens alle zur Erfassung und numerischen Darstellung benötigten Koordinatenwertepaare der Zeichnung auswählen und in CAD-kompatibler Form abspeichern kann.

Diese Aufgabe wird bei der Zeicheneinrichtung der eingangs genannten Art erfindungsgemäss dadurch gelöst, dass dem Eingabetastenfeld Wahltasten zugeordnet sind, mittels der einzelne Koordinatenwertepaare während des Zeichnens auswählbar sind und der Datenaufbereitungseinheit zugeführt werden, welche diese ausgewählten Koordinatenwertepaare in einem Prozessor zur Abgabe über eine Normschnittstelle und zur anschliessenden Weiterverarbeitung in an die Normschnittstelle anschliessbare Speicher- oder Arbeitseinrichtungen aufbereitet.

Die Vorteile der Erfindung liegen insbesondere darin, dass die jeweiligen Koordinatenwertepaare, an denen der Benutzer augenblicklich zeichnet, bei der Erstellung einer Zeichnung in beliebig gewählten Koordinatensystemen verfügbar gehalten werden. Mittels der Wahltasten des Eingabetastenfeldes lassen sich während des Zeichnens einzelne Koordinatenwertepaare auswählen und nach Durchlauf der Datenaufbereitungseinheit über eine Normschnittstelle in einer für spätere Zwecke geeigneten Form an anschliessbare Speicher- oder Arbeitseinrichtungen abgeben. Der bei bekannten Zeicheneinrichtungen erforderliche zusätzliche Arbeits-Zwischenschritt, die Koordinatenwertepaare einer zuvor erstellten Zeichnung auf einer speziell hierfür verwendbaren Einrichtung nachträglich zu erfassen und in eine für numerische Steuerungen etc. geeignete Form umzusetzen, wird eliminiert. Aus den abgespeicherten Koordinatenwertepaaren können Linienelemente in der geeigneten Form-Beschreibungssprache erzeugt und schon bei der Zeichnungserstellung abgespeichert werden. Die erfindungsgemässe Zeicheneinrichtung verwirklicht damit die Funktionen einer herkömmlichen Zeichenanlage und eines Koordinatenerfassungsgeräts bzw. eines Menüfeldes. Unter Zuhilfenahme eines Bildschirms lässt sich sogar das Konstruieren am Zeichenbrett als iterativer Vorgang rechnerunterstützt durchführen, da z.B. die zuletzt gültige Version eines Zeichnungsdetails vom Speichermedium auf den Bildschirm gebracht werden kann, während der Zeichner eine neue Konstruktion zeichnen und mit der bisherigen Konstruktion vergleichen kann.

Alternativ lassen sich auch gemischt transformierte Koordinatensysteme berechnen. Einer Anzeigeeinheit lässt sich dann der nach der ersten Transformation berechnete Koordinatenwert, und der anderen Anzeigeeinheit der nach der zweiten Transformation berechnete Koordinatenwert bzw. ein gezählter, d.h. nicht transformierter Koordinatenwert zuführen.

Durch die Erfindung ist es möglich, an irgendeiner Stelle des Zeichenfelds irgendein beliebiges, gegenüber dem Basissystem gedrehtes oder nicht gedrehtes kartesisches oder Polar-Koordinatensystem aufzuschlagen und dann die Zeichnung in diesem System auszuführen bzw. zu bemassen.

Besonders bevorzugt enthalten die Schaltungsmittel einen Speicher, in den mehrere Nullpunkte einspeicherbar sind, an denen ein eigenes Koordinatensystem – gegenüber dem Basiskoordinatensystem gedreht bzw. nicht gedreht – aufschlagbar ist. Der Benutzer hat dann durch Eingabe am Eingabekastenfeld nur zu bestimmen, ob bezüglich des ersten, zweiten, dritten, vierten ... Nullpunkts gearbeitet werden soll. Die Schaltungsmittel rechnen dann die ausgezählten Koordinatenwertepaare in dasjenige Koordinatensystem um, welches um den betreffenden Nullpunkt gelten soll.

Die Möglichkeit, durch Betätigen einer Umschalttaste von einem ersten Koordinatensystem in ein zweites oder drittes Koordinatensystem überzugehen, erleichtert die Anfertigung und Bemassung von Zeichnungen ganz erheblich, da auf grösseren Zeichnungen oftmals mehrere Schnitte oder Risse dargestellt sind und von einem separaten Bezugspunkt oder Nullpunkt aus bemasst werden müssen.

Erfindungsgemäss enthalten die Schaltungsmittel oder die Steuereinheit ein Register, dessen Inhalt die jeweils gewählte aktuelle Koordinatentransformation, also z. B. Art sowie Nullpunkt und Achsrichtung des neuen Koordinatensystems, kennzeichnet. Die Schaltungsmittel und die Steuereinheit halten dann die Art und die Lage des aktuellen Koordinatensystems sowie die aktuellen Koordinatenwertepaare in diesem System verfügbar.

Es ist somit die ganze Information verfügbar, die zur Beschreibung von Linienelementen in den Linienelementen angepassten wechselnden Koordinatensystemen benötigt wird.

Bevorzugt ist ein Speicher vorgesehen, in den die zur Beschreibung des aktuellen Koordinatensystems erforderlichen Daten sowie die aktuellen Koordinatenwertepaare einspeicherbar sind, wenn der Benutzer die Wahltasten des Eingabetastenfelds betätigt.

Vorteilhafte Weiterbildungen der Erfindung sind durch die Merkmale der Unteransprüche gekennzeichnet.

Im folgenden wird ein Ausführungsbeispiel der Erfindung an Hand der Zeichnungen näher erläutert. Es zeigen:

Fig. 1 eine Draufsicht auf eine erfindungsgemässe Zeicheneinrichtung, die an ein Zeichenbrett montiert ist; und

Fig. 2 ein Prinzipschaltbild der erfindungsgemässen Einrichtung.

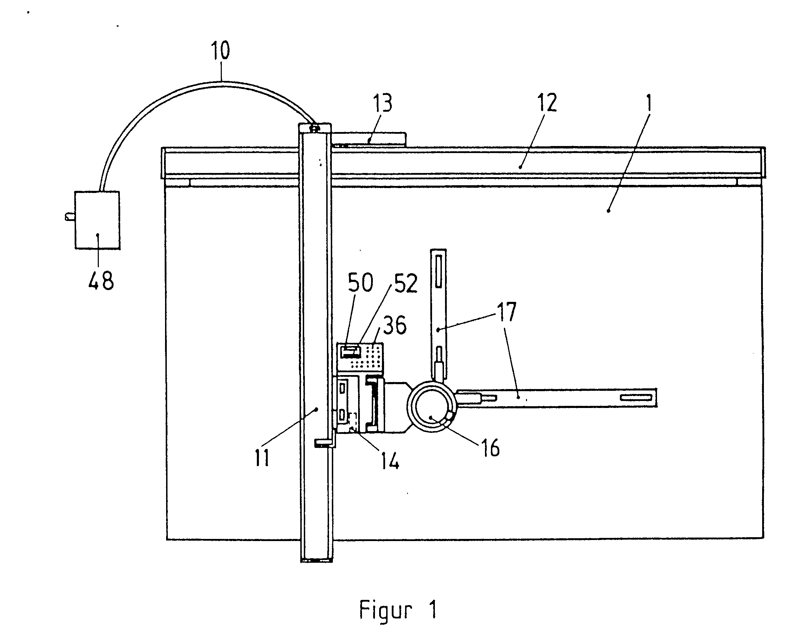

In Figur 1 ist eine Ansicht der Zeicheneinrichtung dargestellt, die an ein Zeichenbrett 1 montiert ist und eine waagrechte Laufschiene 12, einen längs der Laufschiene 12 verschiebbaren ersten Laufwagen 13 mit einer daran befestigten senkrechten Laufschiene 11, und einen zweiten Laufwagen 14 an der Laufschiene 11 trägt. An dem zweiten Laufwagen 14 ist ein Zeichenkopf 16 befestigt, an dem senkrecht zueinander zwei aufsteckbare Zeichenlineale 17 in der Zeichenebene befestigt sind. An Laufwagen 14 ist das Eingabetastenfeld 36 mit den beiden Anzeigeneinheiten 50, 52 angeordnet. Im Gehäuse des Laufwagens 14 und des Eingabetastenfelds 36 sind die Schaltungseinrichtungen zur Durchführung erwünschter Koordinaten-Transformationen untergebracht, deren Ausgangsanschlüsse über Stromschienen (nicht dargestellt) in der Laufschiene 11 bis zu einem Anschlusskabel 10 geführt sind, das in die Datenaufbereitungseinheit 48 führt, die fest an der Zeicheneinrichtung oder an der Zeichenanlage angebracht ist. Die Laufrichtung der beiden Laufwagen 13, 14 legt die Achsrichtungen eines kartesischen Basiskoordinatensystems fest.

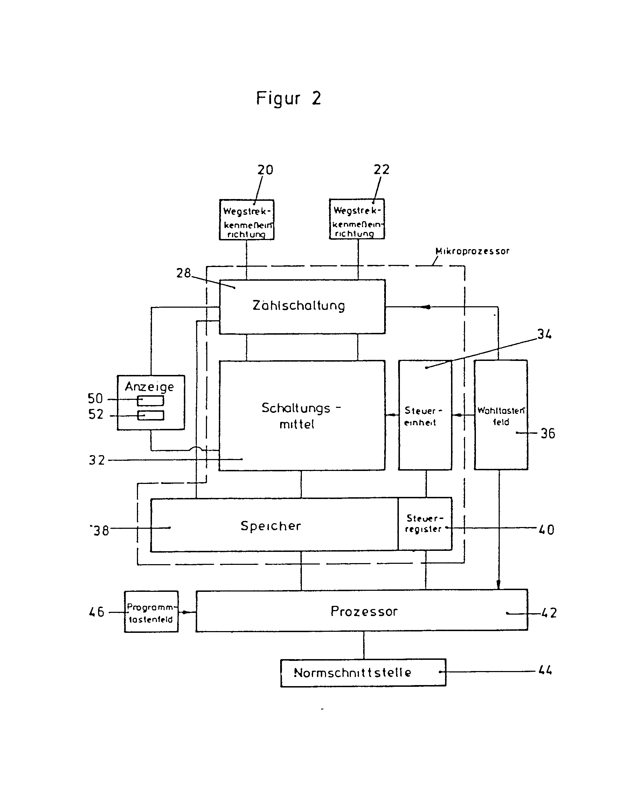

An den beiden Laufwagen 13, 14 sind Wegstreckenmesseinrichtungen 20, 22 angebracht, vgl. Fig. 2, die eine der Laufwagenverschiebung proportionale Anzahl an elektrischen Impulsen abgeben, wobei Richtungsdiskriminatoren innerhalb der Wegstreckenmesseinrichtungen ein die Verschiebungsrichtung («vorwärts» oder «rückwärts») kennzeichnendes Signal liefern und ebenfalls abgeben.

Die von den Wegstreckenmesseinrichtungen 20, 22 erzeugten elektrischen Impulse werden zusammen mit dem Richtungskennzeichen einer Zählschaltung 28 zugeführt, dort mit einem einstellbaren Massstabsfaktor gewichtet und dann als Koordinatenwertepaare x, y des kartesischen Basiskoordinatensystems gezählt. Die gezählten Koordinatenwertepaare werden an Anzeigeeinheiten 50, 52 angezeigt, die im Eingabetastenfeld 36 angeordnet sind und im Bereich des zweiten Laufwagens liegen. Die Massstabsgewichtung bei der Zählung der Wegstreckenimpulse wird vom Eingabetastenfeld 36 aus gesteuert. Die Gewichtung kann «hardware»- oder «software»-mässig durchgeführt werden.

Die Zählschaltung 28 gibt die gezählten Koordinatenwertepaare x, y an Schaltungsmittel 32 ab, die von einer Steuereinheit 34 gesteuert werden, wobei die Steuereinheit 34 von einem Eingabetastenfeld 36 aus durch den Benutzer betätigbar ist. Die Schaltungsmittel 32 führen «software»-mässig oder als Hardware-Schaltung eine Transformation der gezählten Koordinatenwerte x, y in die entsprechenden Koordinatenwerte eines wählbaren anderen Koordinatensystems aus. Mittels der Steuereinheit 34 lässt sich – am Eingabetastenfeld 36 – die gewünschte Koordinaten-Transformation einstellen, wobei die Art des gewünschten Koordinatensystems (kartesisch oder polar), der Nullpunkt des gewünschten Koordinatensystems und die Achsrichtung bzw. die Lage des Nullpunktstrahls durch Betätigen entsprechender Wahltasten wählbar sind. Die Schaltungsmittel 32 geben an ihrem Ausgang die transformierten Koordinatenwertepaare x', y' bzw. R, φ; oder R', φ' bzw. gemischt transformierte Koordinatenwertepaare ab, und je nach Betätigung des Wahltastenfelds lassen sich die gezählten Koordinatenwertepaare von der Zählschaltung 28 oder die transformierten Koordinatenwertepaare von den Schaltungsmitteln 32 an die Anzeigeeinheiten 50, 52 weiterleiten und anzeigen.

Die Schaltungsmittel 32 sind mit einem Speicher 38 verbunden, und die Steuereinheit 34 ist mit einem Steuerregister 40 verbunden. Im Steuerregister 40 werden die Daten des aktuell am Eingabetastenfeld 36 gewählten Koordinatensystems (d. h. Art der Koordinaten-Transformation, Lage der Ursprungskoordinaten, Ausrichtung des Koordinatensystems) gespeichert und stehen abrufbar zur Verfügung.

Im Speicher 38 lassen sich mehrere Nullpunkte für verschiedene Koordinatensysteme speichern, die bei entsprechendem Tastendruck in die Schaltungsmittel 32 sowie zur Aktualisierung auch in das Steuerregister 40 eingelesen werden und in den Schaltungsmitteln 32 zur Berechnung der gewünschten Koordinaten-Transformation zur Verfügung stehen. Das Eingabetastenfeld 36 enthält Wahltasten, bei deren Betätigung die aktuellen Koordinatenwertepaare in den Speicher 38 eingelesen werden.

Die Zählschaltung 28, die Schaltungsmittel 32, die Steuereinheit 34, das Steuerregister 40 sowie der Speicher 38 lassen sich durch einen Mikroprozessor verwirklichen, der bei Eingabe des gewünschten aktuellen Koordinatensystems die gewünschte Transformation von den gezählten Koordinatenwertepaare x, y in die transformierten Koordinatenwertepaare «software»-mässig ausführt.

Dem Speicher 38 und dem Steuerregister 40 ist eine Datenaufbereitungseinheit 48 nachgeschaltet, die einen Prozessor 42 enthält, der die im Speicher 38 und im Steuerregister 40 gespeicherten Daten ausliest und so aufbereitet, dass diese Daten, welche die aktuellen Koordinatenwertepaare in dem aktuellen Koordinatensystem kennzeichnen, in gewünschter Form an eine Normschnittstelle 44 abgegeben werden können. Die Datenaufbereitungseinheit 48 besitzt ein eigenes Programmtastenfeld 46, mittels dessen die Datenaufbereitung so programmiert werden kann, dass die an die Normschnittstelle abgelieferten Daten ohne zusätzliche problemorientierte Programmierung in den angeschlossenen Geräten verarbeitet werden können.

## Patentansprüche

1. Zeicheneinrichtung mit einer Laufwagen-Zeichenmaschine, mit Wegstreckenmesseinrichtungen (20, 22) an den Laufwagen (13, 14), die eine der Laufwagenverschiebung proportionale Anzahl an elektrischen Impulsen abgeben, welche mit einem einstellbaren Massstabsfaktor gewichtet und als Koordinatenwertepaare (x, y) eines kartesischen Basiskoordinatensystems gezählt werden und an Anzeigeeinheiten (50, 52) im Bereich der entsprechenden Laufwagen anzeigbar sind, wobei das Basiskoordinatensystem einen wählbaren, ortsfesten Nullpunkt und in Laufrichtung der Laufwagen festliegende Achsrichtungen aufweist, mit Schaltungsmitteln (32) zur Transformation der gezählten kartesischen Koordinatenwertepaare (x, y) in Koordinatenwertepaare (x', y'; R, φ; R', φ') eines wählbaren anderen Koordinatensystems, und mit einer Steuereinheit (34) mit Eingabetastenfeld (36) zur Wahl der Koordinatentransformation und zur Abgabe der gezählten oder der transformierten Koordinatenwertepaare an die Anzeigeeinheiten (50, 52), wobei eine Datenaufbereitungseinheit (48) vorgesehen ist, welche mit einem Speicher (38) und der Steuereinheit (34) verbunden ist, dadurch gekennzeichnet, dass dem Eingabetastenfeld (36) Wahltasten zugeordnet sind, mittels der einzelne Koordinatenwertepaare während des Zeichnens auswählbar sind und der Datenaufbereitungseinheit (48) zugeführt werden, welche diese ausgewählten Koordinatenwertepaare in einem Prozessor (42) zur Abgabe über eine Normschnittstelle (44) und zur anschliessenden Weiterverarbeitung in an die Normschnittstelle anschliessbare Speicher- oder Arbeitseinrichtungen aufbereitet.

2. Zeicheneinrichtung nach Anspruch 1, dadurch gekennzeichnet, dass an einer von zwei Anzeigeeinheiten (50, 52) der entsprechend einer gewählten Koordinatentransformation transformierte Koordinatenwert, und an der anderen Anzeigeeinheit ein gemäss einer weiteren Koordinatentransformation transformierte Koordinatenwert bzw. der nicht-transformierte Koordinatenwert zur Anzeige bringbar ist (gemischt transformiertes Koordinatensystem).

3. Zeicheneinrichtung nach einem der vorstehenden Ansprüche, dadurch gekennzeichnet, dass die Schaltungsmittel (32) oder die Steuereinheit (34) ein Register (40) enthalten, dessen Inhalt die jeweils gewählte aktuelle Koordinatentransformation kennzeichnet.

4. Zeicheneinrichtung nach einem der vorstehenden Ansprüche, dadurch gekennzeichnet, dass auf der von den Laufwagen (13, 14) überstreichbaren Zeichenebene gleichzeitig mehrere Basiskoordinatensysteme mit jeweils einem eigenen, in einem Speicher (38) einspeicherbaren Nullpunkt festlegbar sind, dass die Steuereinheit (34) über das Eingabetastenfeld (36) die freie Wahl eines der mehreren Basiskoordinatensysteme ($x_1$, $y_1$; $x_2$, $y_2$; $x_3$, $y_3$; ...) ermöglicht und im Register kennzeichnet, und dass die Schaltungsmittel jeweils die gezählten Koordinatenwertepaare ($x_i$, $y_i$) des aktuellen Basiskoordinatensystems empfangen und in entsprechende Werte eines anderen gewählten Koordinatensystems transformieren, wobei das transformierte Koordinatensystem bezüglich des Ursprungs des aktuellen Basiskoordinatensystems transformiert ist.

5. Zeicheneinrichtung nach einem der vorstehenden Ansprüche, dadurch gekennzeichnet, dass ein Bereich des Speichers (38) zum Abspeichern einzelner an den Anzeigeeinheiten (50, 52) anstehender Koordinatenwertepaare vorgesehen ist.

6. Zeicheneinrichtung nach einem der vorstehenden Ansprüche, dadurch gekennzeichnet, dass die Zählschaltungen der Wegstreckenmesseinrichtungen (20, 22), die Schaltungsmittel (32), die Steuereinheit (34), das Steuerregister (40) und der Speicher (38) als Mikroprozessor ausgebildet sind und den Anzeigeeinheiten (50, 52) benachbart an einem Laufwagen (13, 14) untergebracht sind.

7. Zeicheneinrichtung nach Anspruch 6, dadurch gekennzeichnet, dass die Datenaufbereitungseinheit (48) ortsfest an der Zeicheneinrichtung angeordnet ist und mittels elektrischer Leitungen mit der im zweiten Laufwagen untergebrachten Schaltung verbunden ist.

## Claims

1. A draughting apparatus with a carriage draughting machine, comprising travel measuring means (20, 22) on the carriage (13, 14), said travel measuring means (20, 22) emitting a number of electrical pulses proportional to the displacement of the carriage and which are assessed by an adjustable scale factor and counted as pairs of co-ordinate values (x, y) of a cartesian basic co-ordinate system and which are displayed on display units (50, 52) in the region of the corresponding carriage, the basic co-ordinate system comprising a selectable fixed zero point and axial directions fixed in the direction of movement of the carriages, with circuit means (32) for transforming the counted pairs of cartesian co-ordinate values (x, y) into pairs of co-ordinate values (x', y'; R, φ; R', φ') of a different selectable co-ordinate system, and comprising a control unit (34) with an input key pad (36) for selecting the co-ordinates transformation and for emitting the counted or transformed pairs of coordinate values to the display units (50, 52), a data processing unit (48) being provided which is connected to a memory (38) and to the control unit (34), characterised in that associated with the input key pad (36) are selector keys by means of which individual pairs of co-ordinate values can be selected during drawing and fed to the data processing unit (48) which prepares the selected pairs of co-ordinate values in a processor (42) for emission via a standard interface (44) and for subsequent further processing in memory or working units which can be connected to the standard interface.

2. A draughting apparatus according to Claim 1, characterised in that one of two display units (50, 52) is adapted to display the co-ordinate value transformed in accordance with a selected system of co-ordinates transformation, while the other display unit is adapted to display a co-ordinate value which is transformed in accordance with a further system of co-ordinates transformation or alternatively the non-transformed co-ordinate value (mixed-transformed system of co-ordinates).

3. A draughting apparatus according to one of the preceding Claims, characterised in that the circuit means (32) or the control unit (34) comprise a register (40), the contents of which characterise the system of co-ordinates chosen at any given time.

4. A draughting apparatus according to one of the preceding Claims, characterised in that a plurality of basic co-ordinates systems, each with its own zero point which can be stored in a memory (38) can be simultaneously programmed on the plane of the drawing which can be scanned by the carriages (13, 14) and in that via the input key pad (36), the control unit (34) makes it possible freely to choose one of the several basic co-ordinates systems ($x_1$, $y_1$; $x_2$, $y_2$; $x_3$, $y_3$; ...), identifying the system in the register, and in that the circuit means in each case receive the counted pairs of co-ordinate values ($x_i$, $y_i$) of the current basic co-ordinates system and convert them into corresponding values of another selected co-ordinates system, the transformed co-ordinates system being transformed in respect of the origin of the current basic co-ordinates system.

5. A draughting apparatus according to one of the preceding Claims, characterised in that an area of the memory (38) is provided for the storage of individual pairs of co-ordinate values which occur at the display units (50, 52).

6. A draughting apparatus according to one of the preceding Claims, characterised in that the counting circuits of the distance measuring means (20, 22), the circuit means (32), the control unit (34), the control register (40) and the memory (38) are constructed as a microprocessor and are accommodated on a carriage (13, 14) close to the display units (50, 52).

7. A draughting apparatus according to Claim 6, characterised in that the data processing unit (48) is rigidly disposed on the draughting apparatus and is connected to the circuit accommodated in the second carriage by means of electrical conductors.

## Revendications

1. Dispositif pour dessiner comportant une machine à dessiner à chariots munie de dispositifs de mesure de parcours (20, 22) disposés sur les chariots (13, 14) et qui fournissent un nombre d'impulsions électriques proportionnel à la translation des chariots, lesdites impulsions électriques étant pondérées par un facteur d'échelle réglable, comptées en tant que valeurs de coordonnées (x, y) d'un système cartésien de coordonnées de base et affichables sur des unités d'affichage (50, 52) dans la zone des chariots correspondants, le système de coordonnées de base comportant un point d'origine fixe pouvant être choisi et des directions d'axes fixée selon la direction de déplacement des chariots, comportant des moyens de commutation (32) en vue de la transformation des données calculées de coordonnées (x, y) en des données de coordonnées (x', y'; R, φ; R', φ') d'un autre système de coordonnées pouvant être choisi et une unité de commande (34) comportant un clavier d'entrée (36) destiné à la sélection de la transformation de coordonnées et à la fourniture sélective des valeurs de coordonnées comptées ou transformées aux unités d'affichage (50, 52), dans lequel on prévoit une unité de préparation de données (48) qui est relié avec la mémoire (38) et l'unité de commande (34) caractérisé en ce que on adjoint au clavier d'entrée 36 des touches de sélection grâce auxquelles on peut sélectionner des paires de valeurs de coordonnées particulières pendant l'opération de dessin, lesdites paires étant amenées à l'unité de préparation de données (48) puis réalise une préparation de ces paires de valeurs de données sélectionnées dans un processeur (42) en vue d'une fourniture par l'intermédiaire d'une interface standard (44) et en vue d'un traitement ultérieur dans des dispositifs de mémoire ou de travail pouvant être connectés à l'interface standard.

2. Machine pour dessiner selon la revendication 1, caractérisée en ce que l'on peut fournir en vue de l'affichage (système de coordonnées transformé et mélangé) à une des deux unités d'affichage (50, 52) la valeur de coordonnées transformées correspondant à une transformation de coordonnées choisie et à l'autre unité d'affichage d'une valeur de coordonnées transformées selon une autre transformation de coordonnées et ou la valeur de coordonnées non transformée.

3. Dispositif pour dessiner selon l'une des revendications précédentes, caractérisé en ce que les moyens de commutation (32) ou l'unité de commande (34) comprennent un registre (40) dont le contenu caractérise la transformation de coordonnées réellement choisie à chaque fois.

4. Dispositif pour dessiner selon l'une des revendications précédentes, caractérisé en ce que sur le plan du dessin balayé par les chariots (13, 14), on peut fixer plusieurs systèmes de coordonnées de base avec à chaque fois un point d'origine propre mémorisé dans une mémoire (38), en ce que l'unité de commande (34) permet, par l'intermédiaire du clavier de sélection (36) le libre choix d'un des nombreux systèmes de coordonnées de base ($x_1$, $y_1$; $x_2$, $y_2$; $x_3$, $y_3$; ...) et caractérise ledit système dans le registre, et en ce que les moyens de commutation reçoivent à chaque fois les valeurs comptées de coordonnées ($x_i$, $y_i$) du système de coordonnées de base réel et les transforment en des valeurs correspondantes d'un autre système de coordonnées choisi, le système de coordonnées transformé étant transformé par rapport à l'origine de coordonnées de base réel.

5. Dispositif pour dessiner selon l'une des revendications précédentes, caractérisé en ce qu'une zone de la mémoire (38) est prévue pour la mémorisation de valeur coordonnée individuelle présente sur les unités d'affichage (50, 52).

6. Dispositif pour dessiner selon l'une des revendications précédentes, caractérisé en ce que les circuits de comptage des dispositifs de mesure de parcours (21, 22), les moyens de commutation (32), l'unité de commande (34), le registre de commande (40) et la mémoire (38) sont réalisés sous la forme d'un micro-processeur et sont disposés au voisinage des unités d'affichage (52) sur un chariot (13, 14).

7. Dispositif pour dessiner selon la revendication 6, caractérisé en ce que l'unité de préparation de données (48) est disposée de manière fixe sur le dispositif pour dessiner et est reliée au moyen de conduites électriques avec le circuit disposé dans le deuxième chariot.

Figur 1

Figur 2